# DEMANDE DE BREVET EUROPEEN

(11) **EP 0 764 779 A1**
(43) Date de publication de la demande: **26.03.1997**
(21) Numéro de dépôt: 96401943.4
(22) Date de dépôt: 12.09.1996
(51) Int. Cl.: F02K 1/70, F02K 1/68

(54) **Inverseur de poussée de turboréacteur à portes associées à un panneau primaire**

(30) Priorité: 13.09.1995 FR 9510699
(71) Demandeur: HISPANO SUIZA, 92707 Colombes Cedex (FR)
(72) Inventeur: Vauchel, Guy Bernard, 76610 Le Havre (FR)

(57) **Abrégé**

Un inverseur de poussée de turboréacteur à double flux comporte des portes pivotantes (7), intégrées en jet direct dans la paroi extérieure du conduit (14) de soufflante et susceptibles de constituer des obstacles de déviation lors de l'inversion de poussée. Chaque porte (7) est reliée à un panneau primaire (21), intégré en jet direct dans le capotage externe (19) du turboréacteur, en continuité avec la paroi intérieure du conduit (14) de soufflante et susceptible, en inversion de poussée de se déplacer pour venir se placer à l'intérieur dudit conduit annulaire (14) de manière à coopérer avec ladite porte (7) pour assurer la déviation du flux.

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autre cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas dans ce cas d'ensembles propulsifs rapportés sur l'extérieur d'aéronef, particulièrement lorsque ces ensembles propulsifs sont attachés sous les ailes ou à l'arrière du fuselage.

Nous appellerons capotage extérieur, l'ensemble constitué par la paroi extérieure de la nacelle.

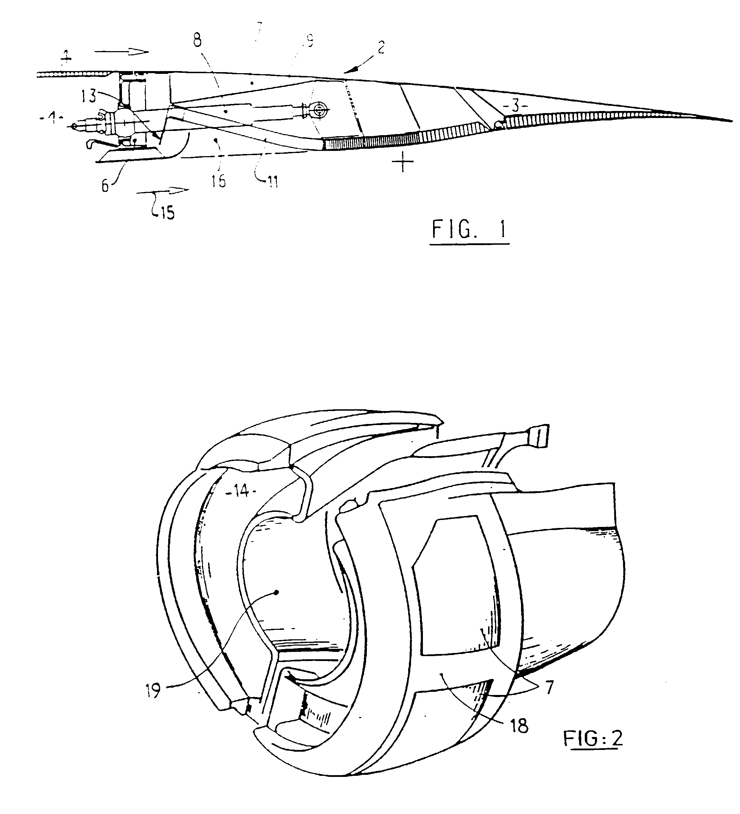

La figure 1 des dessins joints montre un exemple connu de réalisation d'un inverseur de poussée de ce type, appliqué comme le montre la vue schématique partielle en perspective de la figure 2, à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur en amont des portes, par une partie amont 1 en aval des portes par une partie aval 3 et entre les portes 7 par l'intermédiaire de poutres 18 qui relient la partie aval 3 du capotage extérieur à la partie amont 4 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 8.

En position activée, les portes 7 basculent de telle façon que la partie des portes situées en aval des pivots, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.

Des exemples connus de réalisation sont illustrés par exemple par FR 1.482.538 ou par FR-A-2 030 034.

Il existe aussi des dispositifs tels que celui décrit par US 3 605 411 qui permettent d'avoir une saillie de becquet vers l'amont lorsque les portes sont déployées tout en permettant une continuité de la paroi externe du conduit lorsque les portes ne sont pas déployées. On connaît également par FR-A-2 618 853 un dispositif où le becquet est escamoté en jet direct de façon à optimiser les performances du moteur.

Dans certaines applications, comme représenté sur la figure 1, les becquets 13 font saillie par rapport à la face interne 11 des portes 7, même en jet direct sans pour autant faire saillie dans le conduit qui est dans cet exemple muni de cavités 16 légèrement préjudiciables aux performances du moteur alors que le dispositif d'inversion devient extrêmement simple.

La combinaison des becquets et des bords de déviation permettent également d'optimiser la direction d'éjection du flux comme indiqué par FR-A-2 680 547.

Enfin, la commande des portes d'une position à une autre par vérin est connue en soi, nous noterons cependant la solution très simple où il y a un vérin tel que 8 sur la figure 1, par porte fixe dans sa partie amont à la structure fixe amont 1 du capotage extérieur, et dans sa partie aval à la porte 7 en un point situé dans la partie amont, comme décrit également par FR 1.482.538 cité ci-dessus.

Le type d'inverseur de poussée décrit ci-dessus a l'inconvénient majeur que, pour des raisons imposées par des contraintes de dimensionnement aérodynamique du passage du flux dans les passages dégagés par la partie amont de ces portes, la pression du conduit exerce sur ces portes une action qui tend à les ouvrir, en effet, la section totale de ces passages doit être supérieure à la section du conduit dans un plan situé en amont des portes, ceci à cause des pertes en charge engendrées par la déviation du flux, ceci dans le cas où la section de fuite, constituée par la partie aval du conduit non obstruée par la partie aval des portes est minimisée de façon à obtenir une contre poussée convenable.

L'inconvénient majeur décrit ci-dessus se traduit suivant les deux aspects suivants :
- Le fait que les portes tendent à s'ouvrir est un inconvénient du point de vue de la sécurité. Des portes sur lesquelles l'action de la pression tendrait à les maintenir fermées, (non déployées), rendrait le dispositif plus sûr, de même que des portes sur lesquelles l'action de la pression tendrait à les refermer lorsque celles-ci sont dans une position telle que la poussée n'est pas encore inversée, même si elle est partiellement détruite,
- L'action de la pression sur les portes est dans certains exemples connus telle que dans certains cas à prendre en compte dans le dimensionnement de l'inverseur, des efforts très importants transitent dans les vérins entre leurs points d'attache sur la partie amont de la structure fixe et sur les portes. Il en résulte une masse importante de la structure, du système de commande des portes et de verrouillage de celles-ci, et des portes elles-mêmes.

L'objet de l'invention est de proposer un moyen qui permet d'accroître la sécurité et/ou de réduire la masse de ce type d'inverseur.

Ces buts sont atteints conformément à l'invention par un inverseur de poussée à portes pivotantes du type précité caractérisé en ce que chaque porte est reliée à un panneau primaire mobile susceptible, en position fermée, lors du fonctionnement en jet direct, de s'intégrer dans le capotage externe du turboréacteur, formant la continuité de la paroi intérieure du conduit annulaire de flux de soufflante et susceptible, en outre, lors du fonctionnement en inversion de poussée de se déplacer pour venir se placer à l'intérieur dudit conduit annulaire de manière à coopérer avec ladite porte pour assurer la déviation du flux.

En fonction des applications particulières d'inverseur de poussée, soit ledit panneau primaire pivote par soulèvement de son bord aval qui entre dans le conduit annulaire, soit ledit panneau primaire pivote par soulèvement de son bord amont qui entre dans le conduit annulaire.

Selon un premier mode de réalisation, ledit panneau primaire est entraîné par au moins une bielle de liaison à la porte associée. Selon un deuxième mode de réalisation le panneau primaire associé à un moyen de commande des déplacements est menant et entraîne la porte associée au moyen d'au moins une bielle de liaison.
Des dispositions avantageuses adaptées à chaque application particulière sont en outre apportées à la réalisation du panneau primaire permettant la coopération optimale avec les autres éléments constitutifs de l'inverseur de poussée.
D'autres caractéristiques et avantages de l'invention seront mieux compris à la lecture de la description qui va suivre d'un mode de réalisation de l'invention, en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermées, d'un type connu et qui a fait précédemment l'objet d'une description.
- la figure 2 représente une vue schématique en perspective d'un inverseur de poussée du type précité montré en position monté avec les portes fermées.
- la figure 3 représente, dans une vue analogue à celle de la figure 1 un inverseur de poussée à portes pivotantes, en position jet direct, selon un premier mode de réalisation de l'invention.
- la figure 4 représente, dans une vue schématique analogue à celle des figures 1 et 3, l'inverseur de poussée conforme à l'invention dans une position d'inversion de poussée, montrant la position des portes et panneau primaire ;
- les figures 5 et 6, représente l'installation du panneau primaire avec le pivot en zone aval du panneau en configuration jet direct et jet inversé ;
- les figures 7 et 8 représentent un système d'entraînement de l'ensemble panneau porte par le panneau primaire en configuration jet direct et jet inversé, selon un deuxième mode de réalisation de l'invention ;
- les figures 9 et 10 représentent le panneau primaire associé à une configuration de porte à conduit interne en configuration jet direct et jet inversé ;
- les figures 11, 12 et 13 montrent des exemples de forme et de configuration de charnière du panneau primaire ;
- la figure 14 est une vue schématique en coupe suivant la ligne XIV-XIV de la figure 13 montrant un exemple de charnière du panneau primaire ;
- la figure 15 représente une demi-vue en coupe suivant la ligne XV-XV de la figure 4 de l'inverseur avec ses panneaux primaires vu dans l'axe moteur et montre l'effet de répartition du flux inversé pour une position médiane de l'axe de pivotement du panneau primaire ;
- la figure 16 montre dans une demi-vue analogue à celle de la figure 15 un effet de répartition du flux inversé suivant une direction privilégiée lorsque l'axe de pivotement de panneau est décalé ;
- la figure 17 représente une vue suivant la flèche F de la figure 3 montrant la position de l'axe de pivotement de panneau correspondant au résultat représenté sur la figure 16.

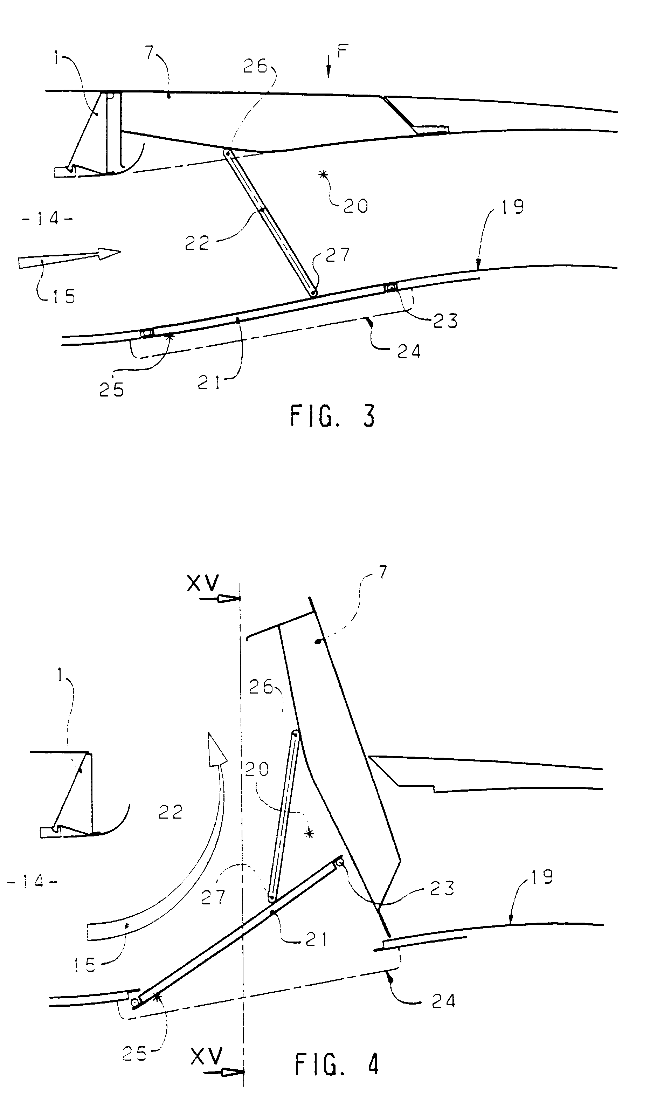

Selon un premier mode de réalisation de l'invention représenté sur les figures 3 et 4, un inverseur de poussée susceptible d'effectuer lors des phases de vol pertinentes d'un avion une inversion de flux du turboréacteur associé comporte les parties principales connues et précédemment décrites dans un exemple connu de réalisation, en référence aux figures 1 et 2. On retrouve notamment la structure fixe amont 1, les portes 7 et la partie aval 3, on retrouve également un capotage externe 19 visible sur la figure 2, enveloppant le turboréacteur et formant la paroi intérieure du conduit annulaire 14 canalisant le flux de soufflante symbolisé par la flèche 15.
Chaque porte 7 est susceptible de pivoter, lors du passage de la configuration en jet direct représentée sur la figure 3 à la configuration d'inversion de poussée représentée sur la figure 4, autour de pivots 20, portés par les poutres 18 de la structure fixe. De manière remarquable et conforme à l'invention, un panneau mobile 21 qui sera appelé panneau primaire est disposé dans le capotage externe 19. Dans la configuration de jet direct, la surface du panneau primaire 21 est en continuité avec la surface dudit capotage externe 19 formant la paroi intérieure du conduit annulaire 14. Ledit panneau primaire 21 est relié par tout moyen mécanique et dans l'exemple représenté sur les dessins par au moins une bielle 22 à la porte 7. Des joints d'étanchéité tels que 23 sont disposés entre le panneau primaire 21 et le capotage externe 19. Afin d'assurer une étanchéité également pendant la phase d'inversion de poussée entre le canal annulaire 14 et le compartiment du turboréacteur, un capotage 24 peut être installé entre le panneau primaire 21 et la zone intérieure au capotage externe 19 du turboréacteur. En variante de réalisation, on peut prévoir sur ledit capotage 24 des ouvertures spécifiques ou supprimer ce capotage 24 afin d'obtenir une ventilation complémentaire du compartiment du turboréacteur pendant la phase d'inversion ou lors d'une phase de vol associée à un pilotage d'ouverture limitée de l'ensemble porte 7 et panneau primaire 21.
Un système de verrouillage et/ou de signalisation du panneau primaire 21 peut-être adjoint et installé sur la structure rigide à l'intérieur du capotage externe 19 de turboréacteur. Ledit panneau primaire 21 est installé pivotant autour d'un axe d'articulation ou pivot 25. Selon les variantes de réalisation, le pivot 25 est porté directement par le capotage externe 19 du turboréacteur ou par une structure indépendante et rigide associée audit capotage externe 19. Le pivot 25 peut notamment être supporté par les poutres reliant l'amont à l'aval du capotage externe 19 du turboréacteur suivant un mode de réalisation connu de ces capotages. La structure indépendante peut être réalisée par un cadre rigide ou toute autre réalisation connue par l'homme du métier. En fonction des applications particulières et selon que l'on cherche à obtenir une action tendant vers l'auto-fermeture de la porte 7 ou une action tendant vers l'auto-ouverture de la porte 7, le point pivot 25 du panneau primaire 21 est placé soit en amont, comme dans l'exemple représenté sur les figures 3 et 4, soit en aval, soit en une position intermédiaire dudit panneau primaire 21.

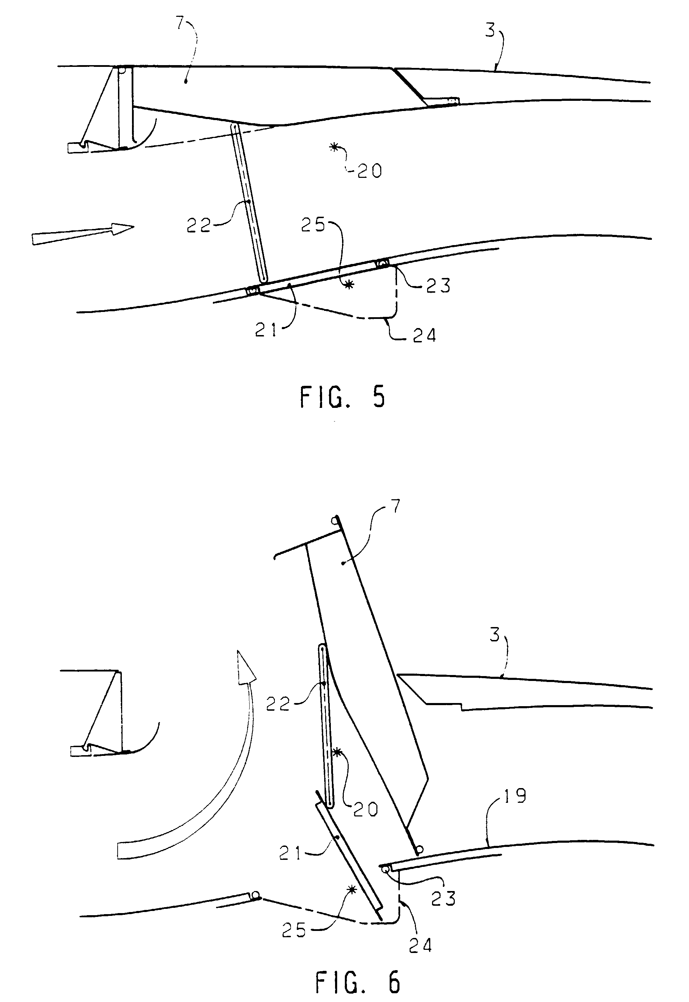

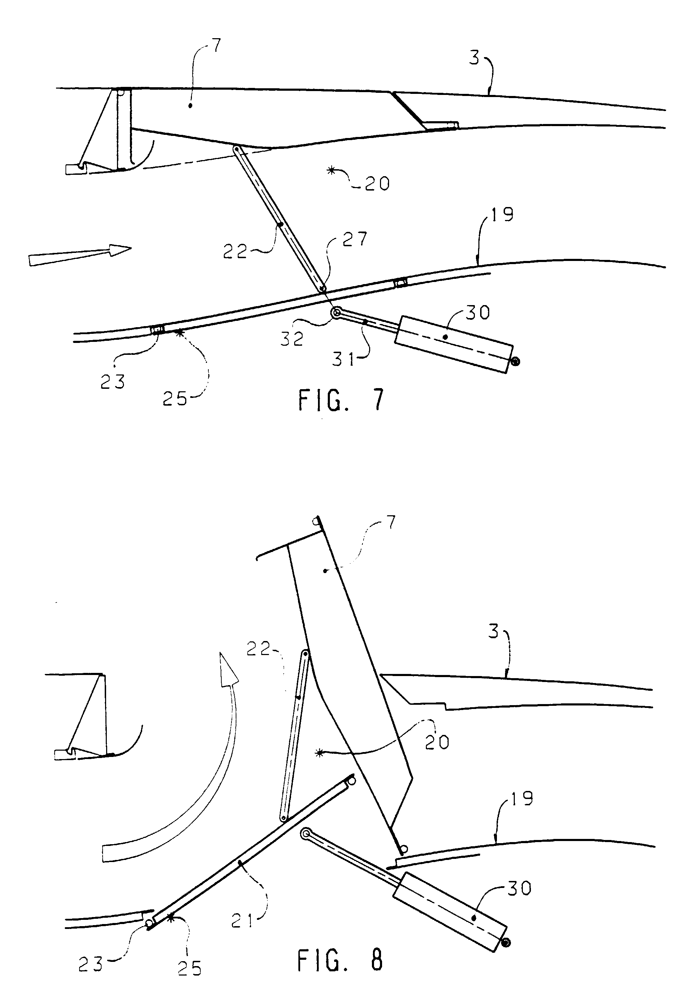

La bielle 22, constituant dans l'exemple représenté sur les figures 3 et 4 le moyen d'entraînement du panneau primaire 21 et permettant de passer de la configuration de jet direct représentée sur la figure 3 à la configuration d'inversion de poussée représentée sur la figure 4, a un profil aérodynamique répondant à sa situation dans la veine de circulation du flux 15 dans le conduit 14 du canal annulaire. La bielle 22 relie la partie interne de la porte 7 en un point 26 situé dans une zone comprise entre le bord amont de la porte 7 et son point pivot 20 à la partie externe du panneau primaire 21 en un point 27 situé dans une zone comprise entre le point pivot 25 et l'extrémité opposée à ce point faisant saillie dans la veine en mode de jet inversé. La bielle 22 est positionnée de manière à obtenir la meilleure transmission des efforts entre la porte 7 et le panneau primaire 21, ce qui peut amener à disposer la bielle 22 normale au flux circulant dans la veine ou avec un angle d'inclinaison déterminé.
Sur l'ensemble bielle 22 et fissures de liaison aux points 26 et 27, il peut être prévu un réglage, afin d'assurer un lissage de veine interne optimal en position jet direct.
Un allègement du cadre avant entrant dans la structure fixe amont 1 de l'inverseur de poussée est rendu possible grâce à la répartition différente obtenue par la mise en place du panneau primaire 21. Notamment, la structure de support du pivot 25 de panneau primaire peut recevoir les systèmes de verrouillage connus en soi et précédemment montés sur la structure fixe 1.
Comme noté précédemment, lorsque le panneau primaire 21 est installé avec un pivot 25 disposé en amont, comme dans l'exemple représenté sur les figures 3 et 4, le panneau primaire 21 pivote dans la veine vers l'aval de la nacelle et l'action du flux 15 sur ledit panneau 21 tend à refermer celui-ci dans toutes les configurations d'utilisation de l'inverseur de poussée. Cette action combinée à l'action du flux 15 sur la partie interne de la porte 7 tend à équilibrer les efforts s'exerçant sur l'ensemble porte 7 et panneau primaire 21 pendant la phase de déploiement et permet donc un allègement du système de commande des déplacements.
Dans l'exemple de réalisation représenté de manière analogue sur les figures 5 et 6 où on retrouve les éléments précédemment décrits en référence aux figures 3 et 4 pour lesquels les mêmes repères ont été utilisés sur les dessins, le panneau primaire 21 est installé avec un pivot 25 disposé en aval. Dans ce cas, le panneau primaire 21 pivote dans la veine vers l'amont de la nacelle et l'action du flux 15 sur la partie interne du panneau primaire 21 procure une aide au déploiement dès que la zone amont dudit panneau 21 arrive en contact avec le flux du canal annulaire lors du passage d'une configuration en jet direct telle que représentée sur la figure 5 vers une configuration d'inversion de poussée telle que représentée sur la figure 6. Dans les exemples de réalisation qui ont été décrits en référence aux figures 3, 4,5 et 6, un système de commande des déplacements de la porte 7 analogue au système connu et précédemment décrit en référence à la figure 1 peut être conservé, la porte 7 étant dans ce cas manoeuvrée au moyen d'un vérin monté sur la structure fixe amont 1 et le panneau primaire 21 étant entraîné par ladite porte 7.
Selon un deuxième mode de réalisation de l'invention illustré par l'exemple représenté sur les figures 7 et 8, la porte 7 est manoeuvrée par l'intermédiaire du panneau primaire 21. Le système de commande des déplacements est dans ce cas installé à l'intérieur du capotage externe 19 du turboréacteur. Dans l'exemple représenté sur les figures 7 et 8 un vérin 30 est associé à chaque panneau primaire 21 mais tout autre système connu en soi peut être utilisé. Dans ce cas le panneau primaire 21 devient menant et entraîne la porte 7 par l'intermédiaire d'un organe de liaison tel que la bielle 22. La tige 31 du vérin 30 est accrochée sur la partie interne du panneau primaire 21 en un point 32 situé dans une zone comprise entre le pivot 25 du panneau primaire 21 et l'extrémité de panneau opposée à ce pivot faisant saillie dans la veine en mode de jet inversé. De manière avantageuse et préférentielle, ledit point 32 et le point 27 d'accrochage de la bielle 22 sur le panneau primaire 21 sont situés en vis à vis de part et d'autre dudit panneau 21. Le moyen de commande 30 utilisé peut être du genre tirant ou poussant, à fonctionnement hydraulique ou électrique et il peut être orienté en amont ou en aval de la nacelle, dans un plan allant de 0 à 90 degrés et dans le cas où plusieurs systèmes sont utilisés, ils peuvent être synchronisés entre eux ou non, en fonction des applications particulières.
Dans tous les cas, ce deuxième mode de réalisation présente l'avantage d'éviter les inconvénients dus à l'utilisation connue antérieure d'un vérin de commande des déplacements de portes d'inverseur et notamment l'obstruction partielle du passage du flux inversé, l'aménagement d'un tunnel sur la partie interne de porte pour loger le passage de tige du vérin, la nécessité de prévoir des organes d'accrochage du vérin sur la porte. Il en résulte une amélioration du lissage de veine.
L'utilisation remarquable conforme à l'invention du panneau primaire 21 présente en outre un avantage significatif d'améliorer l'efficacité du fonctionnement en inversion de poussée et les performances correspondantes. En effet, comme visible notamment sur les figures 4 et 8, le panneau primaire 21 constitue une sorte de rampe qui permet au flux de mieux se diriger vers l'extérieur de la nacelle.

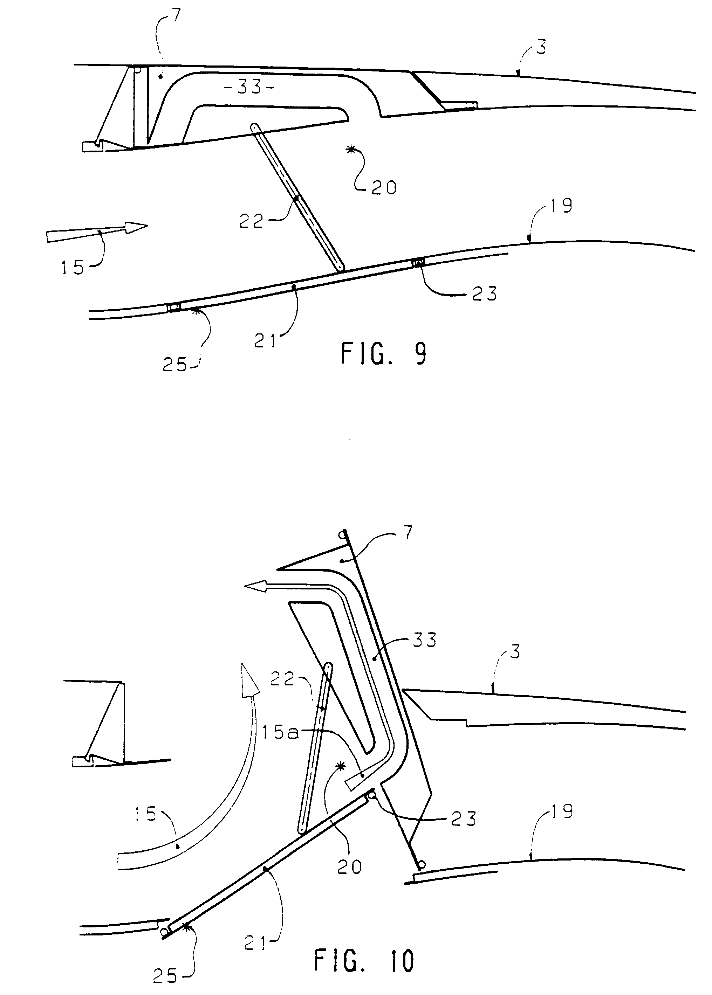

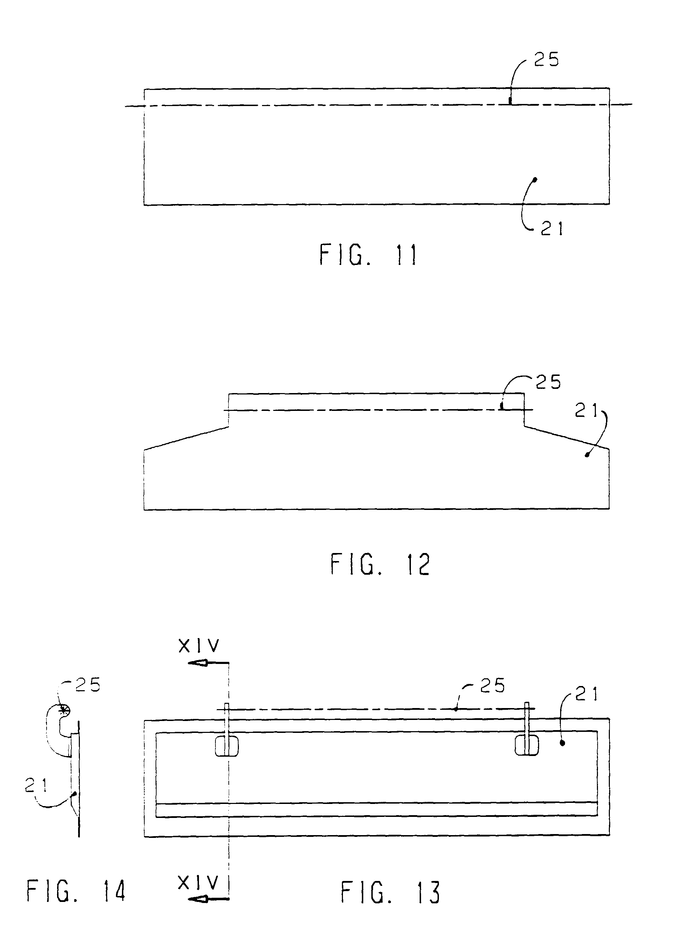

Les figures 9 et 10 de manière analogue représentent un exemple d'application de l'invention à un inverseur de poussée tel que décrit par FR 2.638.784 qui comporte des portes 7 munies d'un conduit interne 33. Grâce au panneau primaire 21, une partie de flux 15a est dans ce cas mieux guidé vers le conduit interne 33 de porte.
En fonction des applications particulières, le panneau primaire 21 peut présenter différentes formes, comportant notamment des découpes amont et aval. Ces découpes peuvent en outre être évolutives pour permettre une coopération satisfaisante avec les autres éléments de l'inverseur de poussée et notamment en assurant l'interface avec la partie interne de la porte 7 en phase d'inversion de flux. Différentes configurations de charnière peuvent en outre être associées au panneau primaire. Les figures 11, 12 et 13 représentent des exemples de telles réalisations. Dans tous les cas, le panneau primaire 21 est d'une largeur inférieure à celle de la porte associée 7 mais, afin d'assurer l'étanchéité centrale, ledit panneau 21 peut être réalisé en une ou plusieurs parties avec recouvrement mutuel en jet direct, celles-ci pouvant avoir entre-elles, en jet inversé, des angles différents d'ouvertures

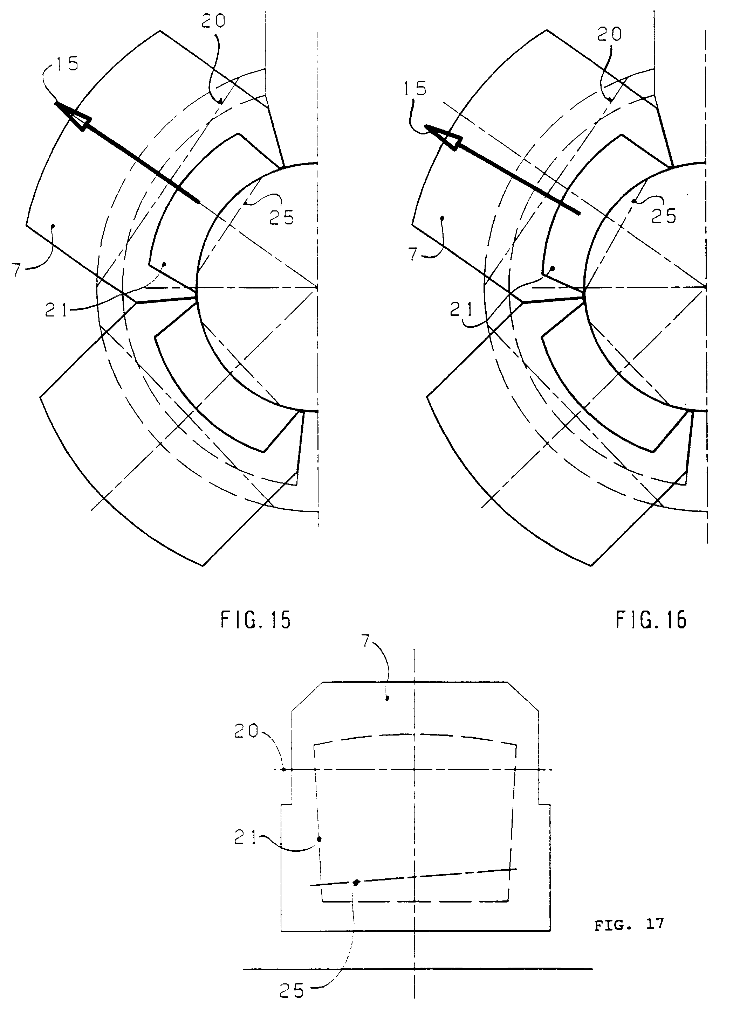

Une solution simple consiste à prévoir l'axe de pivot 25 du panneau primaire 21 placé dans l'axe médian de la porte 7. Il en résulte une répartition équilibrée du flux 15 au travers du puits d'éjection lors du fonctionnement en inversion de poussée, comme cela est schématisé sur la figure 15. Par contre, lorsqu'une direction du flux 15 orientée spécifiquement est recherchée, un décalage du pivot 25, comme représenté sur la figure 17, peut être introduit, notamment en décalant l'axe de pivot 25 du panneau primaire 21 d'un côté comme de l'autre par rapport à l'axe médian du panneau 21 et aussi par rapport à l'amont et à l'aval dudit panneau 21. On obtient ainsi une direction privilégiée du flux 15 au travers du puits d'éjection, comme cela est schématisé sur la figure 16.
On note également que les dispositions de l'invention sont applicables aussi bien en association avec des portes classiques d'inverseur de poussée qu'en les associant à d'autres dispositions particulières telles que l'utilisation d'un panneau mobile conforme aux dispositions décrites par US 3.605.411 ou un panneau amont selon FR-A-2.651.021 ou un autre système de lissage du profil aérodynamique de veine. Ladite bielle 21 peut dans ce cas être reliée directement au point 26 à ces organes de lissage de veine.

## Revendications

1. Inverseur de poussée de turboréacteur à double flux comportant des portes pivotantes (7) susceptibles, en position fermée, lors d'un fonctionnement en jet direct, de s'intégrer dans la paroi extérieure du conduit (14) de flux en arrière de la soufflante de turboréacteur, et susceptibles en outre de pivoter sous l'action d'un moyen de commande (8) des déplacements de manière à constituer des obstacles de déviation de flux lors d'un fonctionnement en inversion de poussée caractérisé en ce que chaque porte (7) est reliée à un panneau primaire mobile (21) susceptible, en position fermée, lors du fonctionnement en jet direct, de s'intégrer dans le capotage externe (19) du turboréacteur formant la continuité de la paroi intérieure du conduit annulaire de flux de soufflante et susceptible, en outre, lors du fonctionnement en inversion de poussée de se déplacer pour venir se placer à l'intérieur dudit conduit annulaire de manière à coopérer avec ladite porte (7) pour assurer la déviation du flux.

2. Inverseur de poussée de turboréacteur à double flux selon la revendication 1 dans lequel ledit panneau primaire (21), lors du fonctionnement en inversion de poussée, pivote autour d'un pivot (25) placé en amont par soulèvement de son bord aval qui entre dans le conduit annulaire (14).

3. Inverseur de poussée de turboréacteur à double flux selon la revendication 1 dans lequel ledit panneau primaire (21), lors du fonctionnement en inversion de poussée, pivote autour d'un pivot (25) placé en aval par soulèvement de son bord amont qui entre dans le conduit annulaire (14).

4. Inverseur de poussée de turboréacteur à double flux selon l'une quelconque des revendications 1 à 3 dans lequel ledit panneau primaire (21) est entraîné par au moins une bielle de liaison (22) articulée sur la porte associée (7), elle même manoeuvrée au moyen d'un vérin (8) monté sur la structure fixe amont (1).

5. Inverseur de poussée de turboréacteur à double flux selon l'une quelconque des revendications 1 à 4 dans lequel des joints d'étanchéité (23) sont disposés entre le panneau primaire (21) et le capotage externe (19) de turboréacteur.

6. Inverseur de poussée de turboréacteur à double flux selon l'une quelconque des revendications 1 à 5 dans lequel un capotage (24) est installé entre le panneau primaire (21) et la zone intérieure au capotage externe (19) du turboréacteur.

7. inverseur de poussée de turboréacteur à double flux selon la revendication 6 dans lequel des ouvertures sont ménagées sur ledit capotage (24).

8. inverseur de poussée de turboréacteur à double flux selon l'une quelconque des revendications 1 à 7 dans lequel le pivot (25) de support du panneau primaire (21) est porté directement par le capotage externe (19) du turboréacteur.

9. Inverseur de poussée de turboréacteur à double flux selon l'une quelconque des revendications 1 à 7 dans lequel le pivot (25) de support du panneau primaire (21) est porté par une structure rigide, indépendante et associée audit capotage externe (19).

10. Inverseur de poussée de turboréacteur à double flux selon l'une quelconque des revendications 1 à 3 et 5 à 9 dans lequel un système de commande des déplacements (30) installé à l'intérieur du capotage externe (19) du turboréacteur est associé audit panneau primaire (21) qui lui-même entraîne la porte associée (7) par l'intermédiaire d'un organe de liaison tel qu'une bielle (22).

11. Inverseur de poussée de turboréacteur à double flux selon l'une quelconque des revendications 1 à 10 dans lequel l'axe de pivot (25) du panneau primaire (21) est placé dans l'axe médian de la porte associée (7).

12. Inverseur de poussée de turboréacteur à double flux selon l'une quelconque des revendications 1 à 10 dans lequel l'axe de pivot (25) du panneau primaire (21) est décalé par rapport à l'axe médian de manière à orienter le flux inversé (15) suivant une direction privilégiée au travers du puits d'éjection.

13. Inverseur de poussée de turboréacteur à double flux selon l'une quelconque des revendications 1 à 3 et 5 à 12 dans lequel un système de verrouillage et/ou de signalisation du panneau primaire (21) est installé sur la structure rigide à l'intérieur du capotage externe (19) du turboréacteur.

14. Inverseur de poussée de turboréacteur à double flux selon l'une quelconque des revendications 1 à 13 dans lequel chaque panneau primaire (21) est réalisé en une seule partie.

15. inverseur de poussée de turboréacteur à double flux selon l'une quelconque des revendications 1 à 13 dans lequel chaque panneau primaire (21) est réalisé en plusieurs parties.
